(19) European Patent Office — Europäisches Patentamt / Office européen des brevets

(11) **EP 0 990 993 A1**

(12) **EUROPEAN PATENT APPLICATION**

(43) Date of publication:
05.04.2000 Bulletin 2000/14

(51) Int. Cl.$^7$: **G06F 17/18**

(21) Application number: **98830458.0**

(22) Date of filing: **28.07.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant: **BULL S.A.**
**78434 Louveciennes Cedex (FR)**

(72) Inventor: **Majo, Tommaso**
**20010 Santo Stefano Ticino (Milano) (IT)**

(74) Representative:
**Pezzoli, Ennio et al**
**Jacobacci & Perani S.p.A.**
**Via Senato, 8**
**20121 Milano (IT)**

(54) **Event counter**

(57) A digital structure (215) for sorting events each having an attribute belonging to one of a plurality of classes (Ei), each class (Ei) being defined by at least one value of the attribute, in which the digital structure (215) includes means (315) for storing an integer pseudo-deviation (PSi) associated with each class (Ei), means (310, 320, 330) for increasing, upon the occurrence of each event, the pseudo-deviation (PSi) corresponding to the class (Ei) to which the attribute of the event which has occurred belongs, means (325, 330, 350) for decreasing all of the pseudo-deviations (PSi) by an integer decrement value (Dec) when the sum of the pseudo-deviations reaches a predetermined value (PV), and means (355m) for supplying a pseudo-mean (PM) equal to the product of the decrement value (Dec) and a number of times the pseudo-deviations (PSi) have been decreased, a frequency (Fi) of each class (Ei) being determined by adding the corresponding pseudo-deviation (PSi) to the pseudo-mean (PM).

FIG.3

EP 0 990 993 A1

**Description**

The present invention relates to a digital structure for sorting events and, in particular to a digital structure according to the preamble of the first claim.

Digital structures are used in various statistical applications, such as, for example, in a data-processing system, to sort a population of generic events with reference to a particular characteristic or attribute which occurs with various values in the events. This enables the distribution of the values of the attribute over the events of the population to be examined; in general, the events of the population are sorted with regard to attribute classes, each class being defined by a lower limit and an upper limit of the attribute value. If the attributes may belong to n distinct classes $E_i$ (where i=1..n), the digital sorting structure determines the frequency $F_i$ of each class of the attribute, that is, the number of events which have attribute values included in this class.

Known digital sorting structures generally use n counters each of which stores a corresponding frequency $F_i$. Although these digital sorting structures are very simple and accurate, they involve the occupation of a considerable amount of memory by the counters. In fact, all of the counters have to be of a size such as to be able to store a maximum value of the frequency $F_i$; this requires $n \cdot \log_2(\text{Max}_{(i=1..n)}F_i)$ bits of memory.

This drawback is experienced in particular when the digital sorting structure is not constituted by a dedicated unit but is included in a device having a different function, typically produced in integrated form on a chip of semiconductor material. In this case, the digital sorting structure constitutes a secondary function of the device in which it is inserted so that the space available for forming it on the chip is extremely limited.

One possible solution would be to break down each frequency $F_i$ into a portion common to all of the classes of events $E_i$ and into a variable portion. In particular, the mean value of the frequencies $F_i$ is indicated M, that is

$$M = \frac{\sum_{i=1}^{n} F_i}{n} = \frac{TOT}{n}, \ TOT = \sum_{i=1}^{n} F_i$$

being the total number of events; the deviation of the frequency $F_i$ from the mean value is then indicated $S_i$, that is, $S_i = F_i - M$. Each frequency $F_i$ is therefore equal to the sum of the mean value and the corresponding deviation, that is $F_i = M + S_i$.

To store the mean value M, this solution requires a counter having a number of bits equal to $\log_2(\text{Max}(M))$ which, in general, is smaller than or at most equal to the number of bits necessary for a single counter storing the generic frequency $F_i$. Moreover, the storage of the deviations $S_i$ also requires n counters each of which must be able to store an absolute maximum value of the deviations $S_i$ plus one sign bit (since the deviations may be either positive or negative); this requires $n \cdot (1 + \log_2(\text{Max}_{(i=1..n)}|S_i|))$ bits. This solution is therefore particularly advantageous when the deviations are small, that is, when the frequencies $F_i$ are similar to one another.

A disadvantage of the solution described above consists of the fact that neither the mean value M nor the deviations $S_i$ are generally whole numbers. This leads to fairly complex logics for performing the various operations on these values and introduces in any case approximations into the obtained results. Moreover, the mean value M and all of the deviations $S_i$ have to be updated upon the occurrence of each event, slowing down the operating speed of the digital sorting structure. It is consequently extremely difficult to incorporate this structure in a device having a different function.

The object of the present invention is to overcome the aforementioned drawbacks. To achieve this object, a digital structure for sorting events as described in the first claim is proposed.

Briefly, the present invention provides a digital structure for sorting events each having an attribute belonging to one of a plurality of classes, each class being defined by at least one value of the attribute, in which the digital structure includes means for storing an integer pseudo-deviation associated with each class, means for increasing, upon the occurrence of each event, the pseudo-deviation corresponding to the class to which the attribute of the event which has occurred belongs, means for decreasing all of the pseudo-deviations by an integer decrement value when the sum of the pseudo-deviations reaches a predetermined value, and means for supplying a pseudo-mean equal to the product of the decrement value and a number of times the pseudo-deviations have been decreased, a frequency of each class being determined by adding the corresponding pseudo-deviation to the pseudo-mean.

The present invention also proposes a processing system comprising this digital structure and a corresponding method of sorting events.

Further characteristics and the advantages of the digital structure for sorting events according to the present invention will become clear from the following description of a preferred embodiment thereof, given by way of non-limiting example with reference to the appended drawings, in which:

Figure 1 is a basic block diagram of a processing system in which the digital sorting structure of the present invention can be used,

Figure 2 shows schematically, the structure of the remote bridge unit,

Figure 3 shows an embodiment of the digital sorting structure.

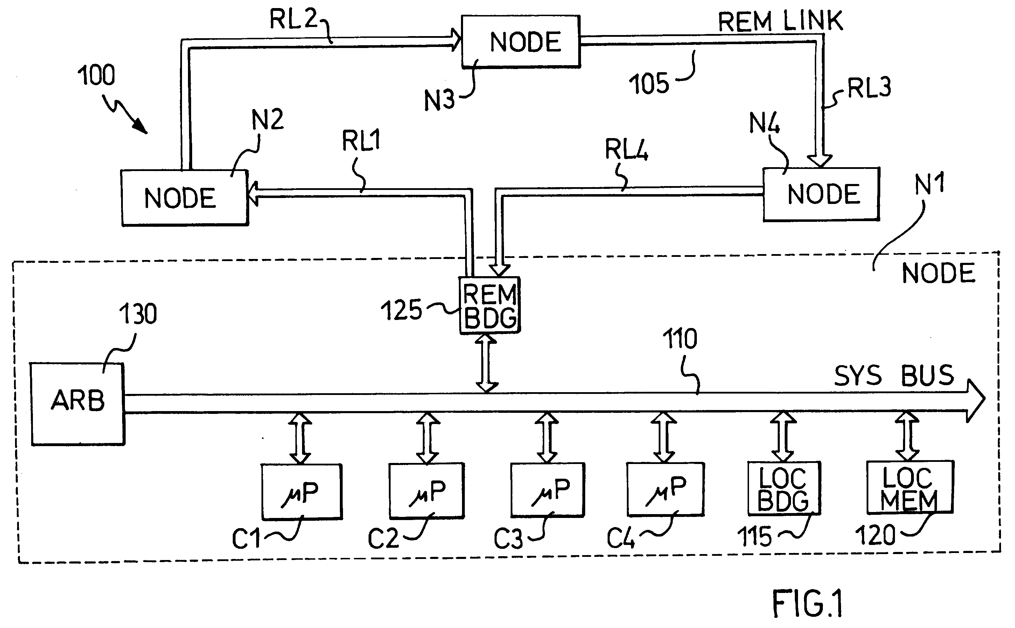

With reference in particular to Figure 1, this shows a processing system 100 of the cache-coherent non-uniform memory access (cc-NUMA) type. The processing system 100 includes two or more nodes, of which four (indicated N1, N2, N3 and N4) are shown in the drawing; the nodes N1-N4 are connected to one another by means of a remote communication-channel ring (REM LINK) 105. The remote ring 105 is constituted by a corresponding number of unidirectional point-to-point communication channels RL1, RL2, RL3 and RL4, each of which interconnects two adjacent nodes; in particular, the channel RLj (where j = 1..4) enables messages to be sent from the node Nj to the next node N(j+1) (the channel RL4 enables messages to be sent from the node N4 to the next node N1). Alternatively, two or more rings, a network (mesh router) or other equivalent remote communication means are provided.

The node N1 (similar considerations apply to the other nodes N2-N4) is constituted by a system bus (SYS BUS) 110 to which one or more processors (µP) C1, C2, C3, C4 (four in the embodiment illustrated), typically having internal, two-level cache-type memories (not shown in the drawing) are connected in parallel. A local bridge (LOC BDG) 115 is also connected to the system bus 110 and controls interconnection with a local bus (not shown in the drawing) to which a group (cluster) of input/output units is connected. The node N1 includes a local memory (LOC MEM) 120, typically a dynamic random access memory (DRAM), connected to the system bus 110 by means of a suitable control unit (not shown in the drawing). A remote bridge unit (REM BDG) 125 connects the system bus 110 to the remote ring 105 and controls the interconnection of the node N1 with the other nodes N2-N4 of the processing system 100; the remote bridge unit 125 generally includes a remote cache memory (not shown in the drawing) in which blocks of data from the local memories of the other nodes N2-N4 are replicated. An arbitration unit (ARB) 130 controls mutually exclusive access to the system bus 110 by the connected agents C1-C4, 115, 120 and 125.

In the processing system 100 described above, each processor C1-C4 can access both the data contained in the local memory 120 and the data contained in the local memories of the other nodes N2-N4, referred to collectively as remote memory. Naturally, the access time is not uniform (hence the name NUMA), the access time to the remote memory being much longer than the access time to the local memory. This system also ensures, by means of suitable protocols, the coherence of the data replicated in the various cache memories, both from the local memory and from the remote memory (hence the name cc)

The digital sorting structure of the present invention may, however, also be used in a different processing system, for example a processing system with symmetrical processors (a symmetrical multi-processor, or SMP), in a single-processor processing system, or the like and, in general, in any application in which it is necessary to sort events.

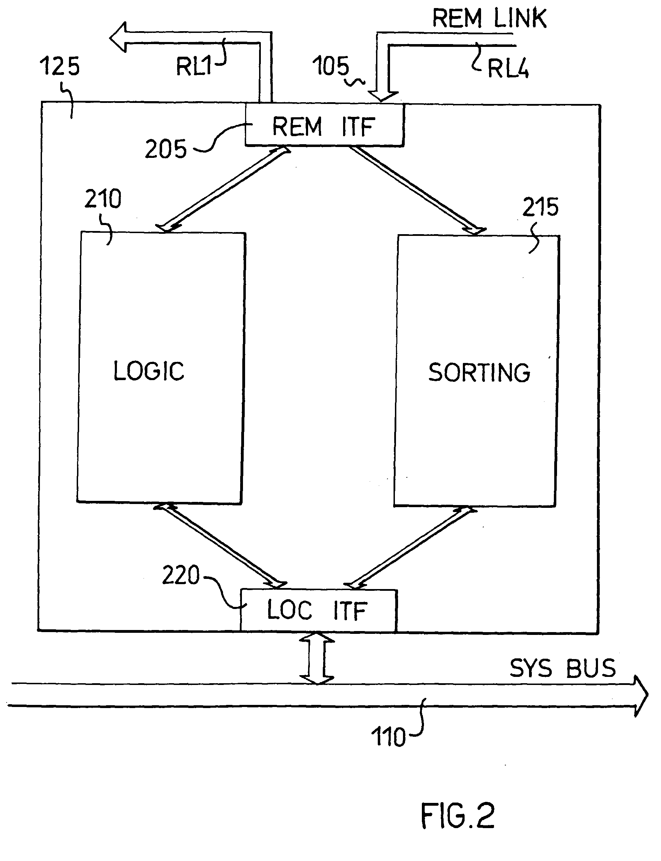

With reference now to Figure 2 (the elements already shown in Figure 1 are identified by the same reference numerals), the remote bridge unit 125 of the node N1 includes a remote interface (REM ITF) 205 connected to the remote ring 105. The messages transmitted on the remote ring 105 are organized in packets. Each packet includes various service fields which identify the destination node, the node which emitted the packet, the length of the packet, the type of packet, its priority for transmission on the remote ring, etc., and a data structure constituted, for example, by 8 fields (beats) of 64 bits in which blocks of data or addresses of blocks of data are stored.

The remote interface block 205 receives the packets transmitted on the channel RL4 from the preceding node N4 and determines the corresponding destination node. If the destination node is other than the node N1, the remote interface 205 transmits the packet received to the next node N2 on the channel RL2. Otherwise, the data structure and the data which identify the type of packet are supplied to a logic block 210 which controls the operation of the remote bridge unit 125 (for example a coherence protocol of the cache memories) and to a block 215 in which a digital structure is formed for sorting events (as described in detail below). Conversely, the logic block 210 constructs a packet to be sent on the remote ring 105 and supplies it to the remote interface block 205 which sends it to the next node N2 on the channel RL2.

A local interface block (LOC ITF) 220 controls a protocol for access to the system bus 110. In particular, the local interface 220 receives from the system bus 110 all of the data transmitted thereon; in the case of an instruction which requires an initialization of the sorting block 215 or an instruction which requires the reading of a selected frequency, emitted, for example, by a processor of the node (control processor), the corresponding data is supplied to the sorting block 215, whereas, otherwise, the data received from the system bus 110 is supplied to the logic block 210. Conversely, the local interface 220 controls requests for access to the system bus 110 in order to transmit thereon data received from the logic block 210, or the value of a frequency selected (in response to a corresponding reading instruction) or an overflow signal received from the sorting block 215.

The block 215 is used for sorting the packets transmitted on the remote ring 105 with regard to any address value contained therein. The packets are sorted with reference to predetermined intervals of the address value (windows), so as to establish the address intervals accessed most by the processing system. This result can be used during tuning of the system in order to optimize its performance; for example, it is possible to move the blocks of data corresponding to the address intervals accessed most to the nodes in which the processes which use this data most frequently are resident (or vice versa) so as to reduce the traffic of packets on the remote ring.

Alternatively, the block 215 is used to sort the packets transmitted on the remote ring 105 with regard to different attributes, such as, for example the type of packet or to sort other events such as the instructions transmitted on the system bus; similarly, the events are sorted with reference to individual values of the attribute, to classes constituted by non-adjacent values of the attribute, etc. In general, the digital structure of the present invention is used to sort events each having an attribute belonging to one of a plurality of classes, each class being defined by at least one value of the attribute.

In the embodiment in question, the fact that the sorting block 215 is disposed within the remote bridge unit 125 is particularly advantageous since it enables the packets transmitted on the remote ring 105 to be sorted without the need to transfer data within the node (that is, on the system bus); the invention may, however, also be implemented with the sorting block disposed in a different position, for example in the arbitration unit, in a processor of the node, etc.

In the digital sorting structure according to the present invention, an integer value PSi (called the pseudo-deviation value) is stored for each class of events Ei. Upon the occurrence of each event, the pseudo-deviation PSi corresponding to the class Ei to which the attribute of the event which has occurred belongs is increased (generally by 1). When the sum of the pseudo-deviations PSi reaches a predetermined value PV, all of the n pseudo-deviations PSi are decreased by an integer value Dec; the sum of the pseudo-deviations PSi is thus always less than the predetermined value PV and greater than or equal to the predetermined value PV minus the decrement value Dec multiplied by the number n of classes of events Ei, that is

$$PV\text{-}n \cdot Dec \leq \sum_{i=1}^{n} PSi < PV.$$

Each frequency Fi is therefore equal to the sum of the corresponding pseudo-deviation PSi and an integer correction value PM (called the pseudo-mean) which is equal to the decrement value Dec multiplied by a number of times the pseudo-deviations Psi have been decreased, that is, Fi=PM+PSi .

This solution leads to the occupation of an extremely limited amount of memory; in fact the digital structure according to the present invention requires the storage solely of the pseudo-mean PM (or a value correlated therewith) and the pseudo-deviations PSi (the sum of which is a limited value as indicated above). The solution proposed is extremely simple and accurate since it always uses whole values and requires the execution solely of elementary operations. Moreover, the structure of the present invention is particularly quick since, upon the occurrence of each event, it requires the increment of a single value (the corresponding pseudo-deviation PSi); the updating of the pseudo-mean PM and the decreasing of all of the pseudo-deviations Psi are in fact effected only when the sum of the pseudo-deviations PSi reaches the predetermined value PV. The use of this solution is consequently very advantageous when the digital sorting structure is incorporated in a device having another function, although a different use thereof is not excluded.

Preferably, the predetermined value PV selected equals n (the number of classes of events Ei) and the decrement value Dec selected equals 1. The sum of the pseudo-deviations PSi is thus always zero or a positive number less than n and the pseudo-mean PM is simply equal to the number of times the pseudo-deviations PSi have been decreased. The present invention may, however, also be implemented with a different predetermined PV value or with a different decrement value Dec; for example, if the decrement value Dec is increased, the frequency of the operations to decrease the pseudo-deviations PSi and to update the pseudo-mean PM is reduced at the expense of a greater variation in the sum of the pseudo-deviations PSi.

The pseudo-mean PM is advantageously obtained from the total number of events TOT, although the use of a counter which stores directly the pseudo-mean PM increased by the decrement value Dec each time the sum of the pseudo-deviations PSi reaches the predetermined value PV is not excluded. The pseudo-mean PM is in fact equal to the integer value of the total number of events TOT divided by the decrement value Dec multiplied by n, that is PM=INT[TOT/n · Dec] .

Alternatively, by adding up (for i=1...n) the equations Fi=PM+PSi ,

$$\sum_{i=1}^{n} Fi = \sum_{i=1}^{n} (PM + PSi) = n \cdot PM + \sum_{i=1}^{n} PSi$$

is obtained, from which

$$\left(\text{since} \sum_{i=1}^{n} Fi = TOT\right)$$

$$TOT = n \cdot PM + \sum_{i=1}^{n} PSi$$

This equation is particularly simple if the predetermined value PV is equal to n and is a power of 2, that is $PV=n=2^p$ and at the same time, the decrement value Dec is equal to 1. Since the sum of the pseudo-deviations PSi is zero or a positive number less than the predetermined value PV, that is, between 0 and $2^p-1$ the sum of the pseudo-deviations PSi is represented in binary form by a number p of bits (for example 6), that is

$$\sum_{i=1}^{n} PSi = b_5 b_4 b_3 b_2 b_1 b_0;$$

the pseudo-mean PM is represented in binary form by a generic number m of bits, that is $PM = a_{m-1}a_{m-2}...a_2a_1a_0$. The multiplication of the pseudo-mean PM by n is equivalent to shifting the corresponding binary value towards the left by the addition of p bits of value 0, that is $n \cdot PM = a_{m-1}a_{m-2}... a_2a_1a_0000000$. The addition to this value of the sum of the pseudo-deviations PSi gives

$$TOT = n \cdot PM + \sum_{i=1}^{n} PSi = a_{m-1} a_{m-2}...a_2 a_1 a_0 000000 + b_5 b_4 b_3 b_2 b_1 b_0$$

$$TOT = a_{m-1} a_{m-2}... a_2 a_1 a_0 b_5 b_4 b_3 b_2 b_1 b_0$$

From this equation, it can be seen that the p least significant bits of the total number of events TOT are equal to the sum of the pseudo-deviations PSi, whilst the remaining bits of the total number of events TOT are equal to the pseudo-mean PM. When the sum of the pseudo-deviations PSi reaches the predetermined value PV, all of the p least significant bits of the total number of events TOT are therefore equal to 0 so that it is extremely easy to determine the moment at which it is necessary to decrease all of the pseudo-deviations PSi.

The embodiment of the present invention described above is particularly simple since it enables both the pseudo-mean PM and the sum of the pseudo-deviations PSi to be derived directly from the total number of events TOT without the need for any calculation.

To evaluate the saving in memory achieved by this solution, it is possible to consider, for example, a digital structure which can sort events with regard to $n=64=2^6$ classes in which 32 bits are used to store the total number of events TOT (6 for the sum of the pseudo-deviations PSi and 26 for the pseudo-mean PM) and 20 bits are used to store each pseudo-deviation PSi (19 bits for the absolute value and 1 bit for the sign). The digital sorting structure thus formed therefore requires $32+64 \cdot 20=1332$ memory bits. The maximum frequency which can be stored in this structure is equal to $Fi = PM+PSi = 2^{26}+2^{19} = 2^{19}(2^7+1) \cong 2^{19} \cdot 2^7 = 2^{26}$. A known sorting structure having the same characteristics would therefore require n counters each of a size such as to be able to store this maximum value of the frequency Fi, that is, $64 \cdot 26=1664$ memory bits. The digital sorting structure described above therefore leads to a saving of $1664-1332 = 332$ memory bits and hence of the order of 20%.

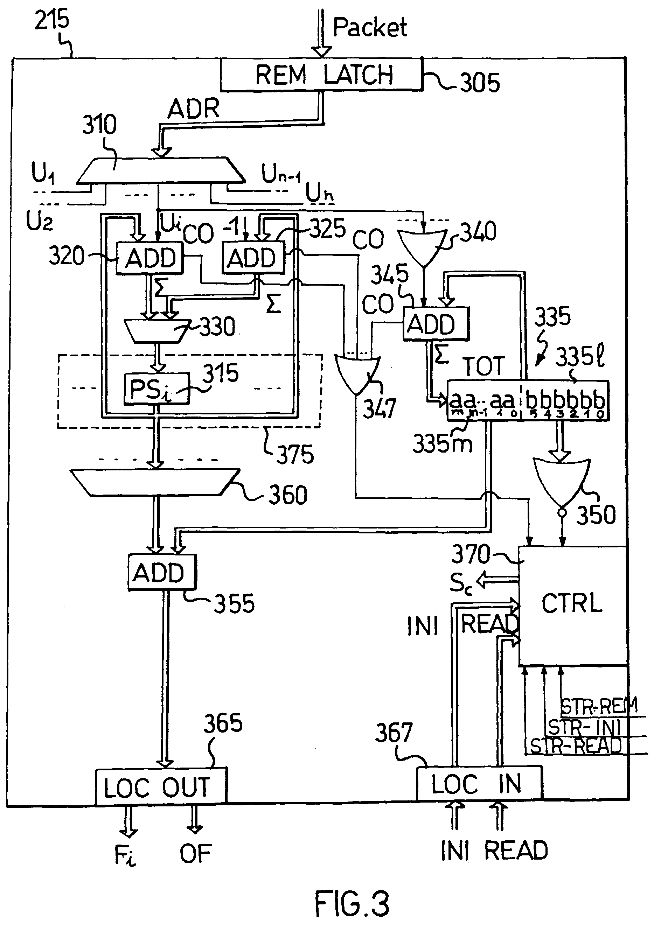

With reference now to Figure 3, the sorting block 215 includes a remote latching block (REM LATCH) 305 which receives the data structure of a packet received from the remote ring as an input (from the remote interface block) and outputs a signal ADR. The signal ADR adopts a value k of between 1 and n which identifies the class Ek to which any address contained in the packet belongs, or a zero value if the address does not belong to any class Ei or if the packet does not contain any address. For this purpose, a description of each class Ei is stored in the latching block 305; in general, the latching block 305 includes n pairs of registers (not shown in the drawing) each of which stores a lower limit and an upper limit of a corresponding class Ei.

The signal ADR is applied to the input of a decoder 310 having n outputs Ui, of which one and only one output correspond to each input combination (other than zero). In particular, when the input signal ADR adopts the value k (between 1 and n), the signal at the corresponding output Uk adopts the value 1, and the signals at the other outputs Ui (with i ⟨⟩k) adopt the value 0; when the input signal ADR adopts the value 0, the signals at all of the outputs Ui adopt the value 0.

The sorting block 215 thus includes n registers 315 (for example of 20 bits), each of which stores the value of a corresponding pseudo-deviation PSi. The output of the register 315 which stores the generic pseudo-deviation Psi and the corresponding output Ui of the decoder 310 (similar considerations apply to the other registers and to the other outputs of the decoder) are connected to the input of an adder circuit (ADD) 320. A further adder 325 has an input connected to the output of the register 315 and another input which is kept at the value -1. Each of the adders 320 and 325 has a data output $\Sigma$ connected to separate inputs of a multiplexer 330 which transfers to its output, which is connected to the input of the register 315, the value present at only one of these inputs, in dependence on a suitable selection signal. Each of the adders 320 and 325 has a further carry output CO which is asserted when an overflow situation occurs in which the result of the sum exceeds the maximum value (as an absolute value) which can be stored in the register 315.

A register 335 (for example with 32 bits) is used to store the total number of events TOT. The n outputs Ui of the decoder 310 are connected to separate inputs of an OR logic gate 340. The output of the register 335 and the output of the OR logic gate 340 are connected to the input of an adder 345; the data output $\Sigma$ of the adder 345 is connected to the input of the register 335. The adder 345 has a further carry output CO which is asserted when an overflow situation arises in which the result of the sum exceeds the maximum value which can be stored in the register 335. The carry output CO of each adder 320, the carry output CO of each adder 325, and the carry output CO of the adder 345 are connected to separate inputs of an OR logic gate 347.

The outputs of a portion 355l of the register 335 containing the p (where $p=\log_2 n$) least significant bits of the total number of events TOT ($b_5b_4b_3b_2b_1b_0$) are connected to the input of a NOR logic gate 350. The outputs of a portion 335m of the register 335 containing the remaining bits of the total number of events TOT ($a_{m-1}a_{m-2}...a_2a_1a_0$) are connected to an input of an adder 355; the other input of the adder 355 is connected to the output of a multiplexer 360 having n separate inputs each connected to the output of a corresponding register 315.
The output of the adder 355 is connected to the input of a local output latching block (LOC OUT) 365 which outputs (to the local interface block) the value of a selected frequency Fi (in response to a corresponding reading instruction) or a signal OF indicative of an overflow situation. A local input latching block (LOC IN) 367 receives (from the local interface block) an initialization signal (INI) for the sorting block 215 (as a result of a corresponding instruction) and a read signal READ for the value of a selected frequency Fi (as a result of a corresponding instruction) and outputs the same values.

The operation of the sorting block 215 is controlled by a control logic unit (CTRL) 370 constituted basically by a finite state machine, by means of suitable control signals (collectively indicated Sc). The output of the OR logic gate 347, the output of the NOR logic gate 350 and the outputs of the latching block 367 are connected to the input of the control logic unit 370 which also receives as inputs a signal STR_REM which indicates (when asserted) that the data structure of a packet is available at the input of the latching block 305, a signal STR_INI which indicates (when asserted) that the initialization signal INI is available at the input of the latching block 367, and a signal STR_READ which indicates (when asserted) that the read signal READ is available at the input of the latching block 367.

When the initialization signal INI is available at the input of the latching block 367 (signal STR_INI asserted) the control logic unit 370 receives this signal and consequently sets the internal registers of the remote latching block 305 so as to define the various classes Ei; at the same time, the n registers 315 (pseudo-deviations PSi) and the register 335 (total number of events TOT) are set to a zero value. The control logic unit 370 then enables the operation of the sorting block 215.

Each time the data structure of a packet is available at the input of the remote latching block 305 (signal STR_REM asserted) the control logic unit 370 activates the remote latching block 305 so as to output the corresponding signal ADR which determines the value of the outputs Ui of the decoder 310. The signal output by each adder 320 is transferred by means of the multiplexer 330 to the corresponding register 315; at the same time, the signal output by the adder 345 is transferred to the register 335.

If the packet contains no address or contains an address which does not belong to any class Ei, the signal ADR adopts the value 0 so that the signals at all of the outputs Ui of the multiplexer 310 and the signal at the output of the OR logic gate 340 also adopt 0 values. In this situation, all of the pseudo-deviations PSi, stored in the n registers 315 and the total number of events TOT stored in the register 335 are kept unchanged. If the packet contains an address which belongs to a class Ek, the signal ADR adopts the corresponding value k (between 1 and n) so that the signal at the output Uk of the multiplexer 310 adopts the value 1 whilst the signals at the other outputs Ui (where i ⟨⟩k) adopt values 0; the output of the OR logic gate 340 thus adopts the value 1. In this situation, the pseudo-deviation PSk is increased by 1, and the other pseudo-deviations PSi. (where i ⟨⟩k) are kept unchanged; at the same time, the total number of events TOT is increased by 1.

When the sum of the pseudo-deviations PSi reaches the predetermined value $PV=n$, all of the bits $b_5b_4b_3b_2b_1b_0$ of the portion 335l of the register 335 adopt the value 0 so that the output of the NOR logic gate 350 adopts the value 1. In this situation (except for an initial situation in which the total number of events TOT is zero), the logic control unit 370 transfers the signal output by each adder 325 to the input of the corresponding register 315, by means of the multiplexer 330; each pseudo-deviation PSi is thus decreased by 1.

If an overflow situation arises in a register 315 (by either a positive or a negative value) or in the register 335, the carry output of one of the adders 320, the carry output of one of the adders 325, or the carry output of the adder 345 adopts the value 1 so that the output of the OR logic gate 347 also adopts the value 1. In this situation, the control logic unit 370 controls the latching block 365 so as to produce a corresponding output signal OF (sent to the local interface block); at the same time, the operation of the sorting block 215 is disabled. In general, when the control processor receives an instruction indicative of an overflow situation, this processor reads all of the n frequencies Fi and then consequently modifies (by means of an initialization instruction) the classes of addresses (for example, distributing these classes in an interval of addresses which is accessed to a greater extent)

When the read signal READ for a selected frequency Fi is available at the input of the latching block 367 (signal STR_READ asserted), the control logic unit 370 receives this signal and transfers the contents of the corresponding register 315 (pseudo-deviation PSi), by means of the multiplexer 360, to the input of the adder 355. The signal output by the adder 355 (which is equal to the sum of the pseudo-deviation PSi and the pseudo-mean PM, that is, equal to the frequency Fi) is then transferred to the input of the latching block 365 for subsequent supply to the local interface block.

In a preferred embodiment of the present invention, the n registers 315 are formed by means of a random access memory (RAM) 375. The RAM 375 has n locations (entries) each of which stores a pseudo-deviation PSi. The sorting block 215 consequently requires only an adder 320, an adder 325 and a multiplexer 330 which operate on a location of the RAM 375 addressed by the control logic unit 370; the multiplexer 360 is not required either, since the pseudo-deviation PSi is selected directly by the control logic unit 370 by means of an address of the corresponding location of the RAM 375.

This structure is particularly compact since it takes up even less memory. In this case, each operation to decrease all of the pseudo-deviations PSi requires n memory cycles with a duration at least equal to n periods of a clock signal of the system in order to access (read and write) the n locations of the RAM 375 in sequence. During this operation, the sorting block 215 cannot be used to increase the pseudo-deviations PSi in accordance with packets input to the latching block 305. It should be noted, however, that the packets are generally transmitted on the remote ring at a frequency at most equal to one packet every 5-10 clock periods (in a situation of saturation of the remote ring) so that the number of packets not sorted during the operation to decrease the pseudo-deviations PSi is extremely small (of the order of a few tens); the error introduced in the frequencies Fi is therefore negligible.

However, the register 335 is preferably formed separately by m+p bistable (flip-flop) circuits, since the total number of events TOT includes a number of bits generally different from that of each pseudo-deviation PSi. This also enables the register 335 to be formed with as large a capacity as desired with a negligible increase in the memory occupied.

The present invention may, however, also be implemented with a different structure of the sorting block. For example, in an alternative embodiment, the portion 335m of the register 335 and the output of the multiplexer 360 are connected directly to the local output latching block 365 (without the adder 355). The sorting block thus outputs, in response to a read instruction for a selected frequency Fi (emitted by the control processor), the pseudo-mean PM and the corresponding pseudo-deviation PSi, which are then added by the control processor (to derive the frequency Fi).

Naturally, in order to satisfy contingent and specific requirements, an expert in the art may apply to the above-described structure for sorting events many modifications and variations all of which, however, are included within the scope of protection of the invention as defined by the following claims.

**Claims**

1. A digital structure (215) for sorting events each having an attribute belonging to one of a plurality of classes (Ei), each class (Ei) being defined by at least one value of the attribute,
    characterized in that
    it includes means (315) for storing an integer pseudo-deviation integer (PSi) associated with each class (Ei), means (310, 320, 330) for increasing, upon the occurrence of each event, the pseudo-deviation (PSi) corresponding to the class (Ei) to which the attribute of the event which has occurred belongs, means (325,330, 350) for decreasing all of the pseudo-deviations (PSi) by an integer decrement value (Dec) when the sum of the pseudo-deviations reaches a predetermined value (PV), and means (355m) for supplying a pseudo-mean (PM) equal to the product of the decrement value (Dec) and a number of times the pseudo-deviations (PSi) have been decreased, a frequency (Fi) of each class (Ei) being determined by adding the corresponding pseudo-deviation (PSi) to the pseudo-mean (PM).

2. A digital structure (215) according to Claim 1, in which the decrement value (Dec) is 1 and in which the predetermined value (PV) is equal to a number of classes (n)

3. A digital structure (215) according to Claim 2, further comprising means (335) for storing a total number of events (TOT) and means (335m) for deriving the pseudo-mean (PM) from the total number of events (TOT).

4. A digital structure (215) according to Claim 3, in which the number of classes (n) is equal to $2^p$, the decreasing means (325, 330, 350) decreasing all of the pseudo-deviations (PSi) when all of the p bits of least weight $(b_5b_4b_3b_2b_1b_0)$ of the total number of events (TOT) are zero and the pseudo-mean (PM) being equal to the remaining bits $(a_{m-1}a_{m-2}...a_2a_1a_0)$ of the total number of events (TOT).

5. A digital structure (215) according to Claim 3 or Claim 4, further comprising means (347) for detecting a situation of overflow of the means (315) for storing the pseudo-deviations (PSi) or of the means (335) for storing the total number of events (TOT).

6. A digital structure (215) according to any one of Claims 1 to 5, in which the means (315) for storing the pseudo-deviations (PSi) include a random access memory (375) having a plurality of locations each of which can store a corresponding pseudo-deviation (PSi).

7. A processing system (100) comprising the digital structure (215) for sorting events according to any one of Claims 1 to 6.

8. A processing system (100) according to Claim 7, comprising a plurality of nodes (N1-N4), and remote communication means (105) for interconnecting the nodes (N1-N4), each node (N1) comprising a bridge unit (125) for connecting the node (N1) to the remote communication means (105), in which the digital structure (215) is disposed in the bridge unit (125)

9. A processing system (100) according to Claim 8, in which the bridge unit (125) comprises means (205) for receiving packets transmitted on the remote communication means (105), the events being constituted by the packets received and the attribute being constituted by an address of a block of data which may be contained in the packet received.

10. A method of sorting events each having an attribute belonging to one of a plurality of classes (Ei), each class (Ei) being defined by at least one value of the attribute,
characterized by the steps of:

storing an integer pseudo-deviation (PSi) associated with each class (Ei),

increasing, upon the occurrence of each event, the pseudo-deviation (PSi) corresponding to the class (Ei) to which the attribute of the event which has occurred belongs,

decreasing all of the pseudo-deviations (PSi) by an integer decrement value (Dec) when the sum of the pseudo-deviations reaches a predetermined value (PV),

supplying a pseudo-mean (PM) equal to the product of the decrement value (Dec) and a number of times the pseudo-deviations (PSi) have been decreased,

determining a frequency (Fi) of each class (Ei) by adding the corresponding pseudo-deviation (PSi) to the pseudo-mean (PM).

FIG.1

FIG.2

FIG.3

**European Patent Office**

## EUROPEAN SEARCH REPORT

Application Number

EP 98 83 0458

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 181 374 A (AEPPLI KURT) 26 January 1993 * column 3, line 32 – line 39; claim 3 * --- | 1,10 | G06F17/18 |
| A | US 4 054 782 A (WEIBEL EWALD RUDOLPH) 18 October 1977 * abstract * --- | 1,10 | |
| A | EP 0 205 122 A (TEKTRONIX INC) 17 December 1986 ----- | | |

**TECHNICAL FIELDS SEARCHED (Int.Cl.6)**

G06F

The present search report has been drawn up for all claims

| Place of search | Date of completion of the search | Examiner |
|---|---|---|
| THE HAGUE | 11 December 1998 | Pierfederici, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)